# EUROPEAN PATENT APPLICATION

(11) **EP 2 822 294 A1**
(43) Date of publication of application: **07.01.2015**
(21) Application number: 12869830.5
(22) Date of filing: 16.08.2012
(51) Int. Cl.: H04R 1/34, H04M 1/11, H04R 1/02

(54) **SOUND GUIDING DEVICE AND SOUND GUIDING MEMBER IN MOBILE TERMINAL DEVICE**

(30) Priority: 02.03.2012 JP 2012001182
(71) Applicant: Trinity Inc., Niiza-shi Saitama 352-0001 (JP)
(72) Inventor: HOSHIKAWA Tetsushi, Niiza-shi Saitama 352-0011 (JP)
(74) Representative: Gulde & Partner
(86) International application number: PCT/JP2012/070824
(87) International publication number: WO 2013/128675

(57) **Abstract**

It is possible to enable sound, such as music or words, to be caught clearly without raising the sound volume in particular in the use of a mobile terminal device. In a mobile terminal device provided with a speaker on a rear surface side, a sound guiding device that guides sound generated by the speaker in a front direction has a case 20 that covers the speaker 15 when attached to the mobile terminal device 11. A sound guiding section 21 that guides sound generated by the speaker roughly in the front direction and a sounding port 22 through which the guided sound is emitted to the outside are provided at a position of the case corresponding to the speaker of the mobile terminal device when the case is attached to the mobile terminal device.

## Description

### Technical Field

The present invention relates to a sound guiding device and a sound guiding member in a mobile terminal device provided with a speaker on a rear surface side that guide sound generated by the speaker in a front direction.

### Background Art

A mobile terminal device uses the front surface of the device for a display and is thus often provided with a speaker on a rear surface side. For this reason, sound is emitted toward the rear surface of the mobile terminal device, and in a style that watches the device while viewing a screen, sound is not easily caught. For clear listening, there is no alternative but to raise the sound volume; however, there is a problem in that leakage of sound to the surrounding area increases.

An improvement for this problem has been suggested, and for example, Japanese Utility Model No. 3171000 discloses a case that improves audio in combination with an internal speaker provided on the rear surface or the like of the mobile terminal. However, in Japanese Utility Model No. 3171000, an exit opening of sound is provided to project outward from the edge of the case, and there is a defect such that the projection causes trouble. Although a proposal in which the exit of sound is formed in a slit shape to eliminate projection and is provided at the edge of the front surface of the case has been illustrated, there is still a problem with the magnitude of sound or sound quality due to the slit shape.

[Patent Citation 1] Japanese Registered Utility Model No. 3171000

### Disclosure of Invention

### Technical Problem

The invention has been accomplished in consideration of the above-described problem, and an object of the invention is to enable sound, such as music or words, to be caught clearly without raising the sound volume in particular in the use of a mobile terminal device. Another object of the invention is to provide a sound guiding device and a sound guiding member in a mobile terminal device that do not cause trouble in handling and are easy to use.

### Technical Solution

In order to solve the above-described problem, the invention provides a sound guiding device in a mobile terminal device provided with a speaker on a rear surface side that guides sound generated by the speaker in a front direction. The sound guiding device has a case that covers the speaker when attached to the mobile terminal device, and a sound guiding section that guides sound generated by the speaker roughly in the front direction, and a sounding port through which the guided sound is emitted to the outside are provided at a position of the case corresponding to the speaker of the mobile terminal device when the case is attached to the mobile terminal device.

As the mobile terminal device to which the invention is applied, iPad (Product name of Apple's tablet computer) is well known. In this device, a speaker is on a rear lower right side (a lower left side on the rear surface) when viewed from the front surface of the body, and even if a place where the sound hole of the speaker is provided includes a curved surface, the generated sound is only directed toward the rear of the device body and downward.

Accordingly, in the invention, sound generated by the speaker is guided roughly in the front direction using the case attached to the mobile terminal device. The case primarily covers the rear surface side of the mobile terminal device, and thus, the sound guiding device of the invention is incorporated in the portion of the case that covers the portion of the speaker. The case that is used in the invention includes all cases having a structure which covers the speaker portion when the case is attached to the mobile terminal device, in addition to the case that covers the rear surface side of the mobile terminal device.

The sound guiding device is configured such that the sound guiding section that guides sound generated by the speaker roughly in the front direction and the sounding port through which the guided sound passes to the outside are provided at the position of the case corresponding to the speaker of the mobile terminal device when the case is attached to the mobile terminal device. The device of the invention is used along with the case having a portion which covers the speaker. Although the case has a structure that covers the speaker portion on the rear surface side of the mobile terminal device, a part of the case may wrap around the front surface side to cover the outer circumferential portion of the display.

It is preferable that the sound guiding section has a guide wall surface that is curved from the rear surface side of the mobile terminal device toward the front surface such that sound generated by the speaker is directed toward the sounding port, and the sound guiding section is configured such that a gap between an outer surface of the mobile terminal device of the speaker portion and the guide wall surface increases gradually toward the sounding port. With this configuration, a loudspeaker effect in a bell mouth shape, in which the direction of the sound wave changes gradually, is expected.

The case may be formed by a resin molding method, and may have the sound guiding section and the sounding port in a part of the case. The sound guiding section and the sounding port are formed integrally of plastic, and thus it is convenient that a sound guiding function is provided simultaneously when the case is attached to the mobile terminal device.

The case may have a sound hole formed at a position corresponding to the speaker, a sound guiding member that includes a sound guiding section and a sounding port and is formed separately from the case may be provided, and the sound guiding member may be mounted on the outer side of the case in the vicinity of the sound hole and may be integrated with the case. In this case, the sound guiding member is formed separately from the case and is mounted at the position of the case corresponding to the speaker.

The invention also provides a sound guiding member that has a curved portion having a curved shape similar to an outer surface of a mounting place on the case, and a pair of right and left side plates on the right and left sides of the curved portion, in which a plurality of hooks that are fitted to the edge of the case are provided in an end portion on the sounding port side, a plurality of protrusions are provided in the vicinity of an opposite end portion, and the protrusions are fitted into fit holes formed in a part of a sound hole section.

### Advantageous Effects

The invention is configured and operated as described above, and thus sound of the speaker provided on the rear surface side is guided roughly in the front direction. For this reason, the invention has an effect of enabling sound, such as music or words, to be caught clearly without raising the sound volume in particular in the use of a mobile terminal device. According to the invention, it is possible to provide a sound guiding device and a sound guiding member in a mobile terminal device that do not cause trouble in handling and are easy to use.

### Best Mode for Carrying Out the Invention

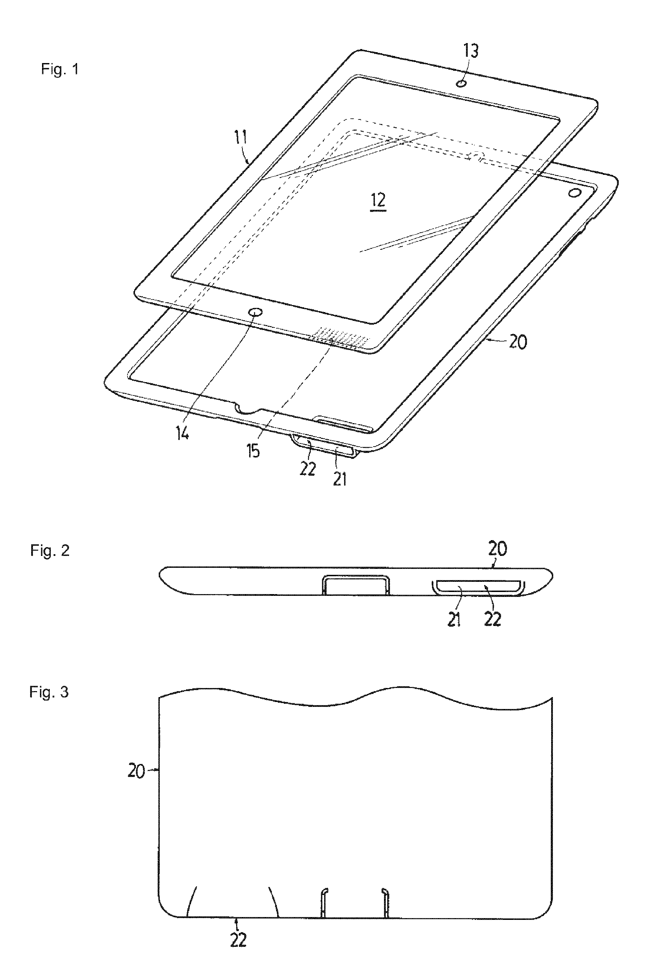

Hereinafter, the invention will be described in more detail referring to an embodiment shown in the drawings. Fig. 1 is a front view showing a sound guiding device 10 according to Example 1 of the invention. Reference numeral 11 represents iPad (Product name of Apple's tablet computer) as a mobile terminal device. A display 12 occupies a majority of the front surface of the mobile terminal device, and a front surface-side camera 13 and an operating section 14 are provided in a frame portion of the mobile terminal device. A speaker 15 is provided on a rear lower right side (a position indicated by a broken line of Fig. 1 on a lower left side of the rear surface) when viewed from the front surface.

The sound guiding device 10 of the invention has a case that is formed to have a shape in close contact with the rear surface side to be attached to the rear surface side of the mobile terminal device 11. In Example 1 shown in Figs. 1 to 5, the case 20 is configured such that, when the case 20 is attached to the mobile terminal device 11, a sound guiding section 21 that guides sound generated by the speaker 15 roughly in a front direction and a sounding port 22 through which the guided sound passes to the outside are provided at a position of the case 20 corresponding to the speaker 15 of the mobile terminal device.

The case 20 of Example 1 of the invention has a portion, which becomes the sound guiding section 21 and the sounding port 22, in a part of the case 20. The sound guiding section 21 has a guide wall surface 23 that is curved from the rear surface side of the mobile terminal device 11 toward the front surface such that sound generated by the speaker 15 is directed toward the sounding port 22. The guide wall surface 23 is recessed from the case inner surface in contact with the mobile terminal device 11 to configure the void sound guiding section 21.

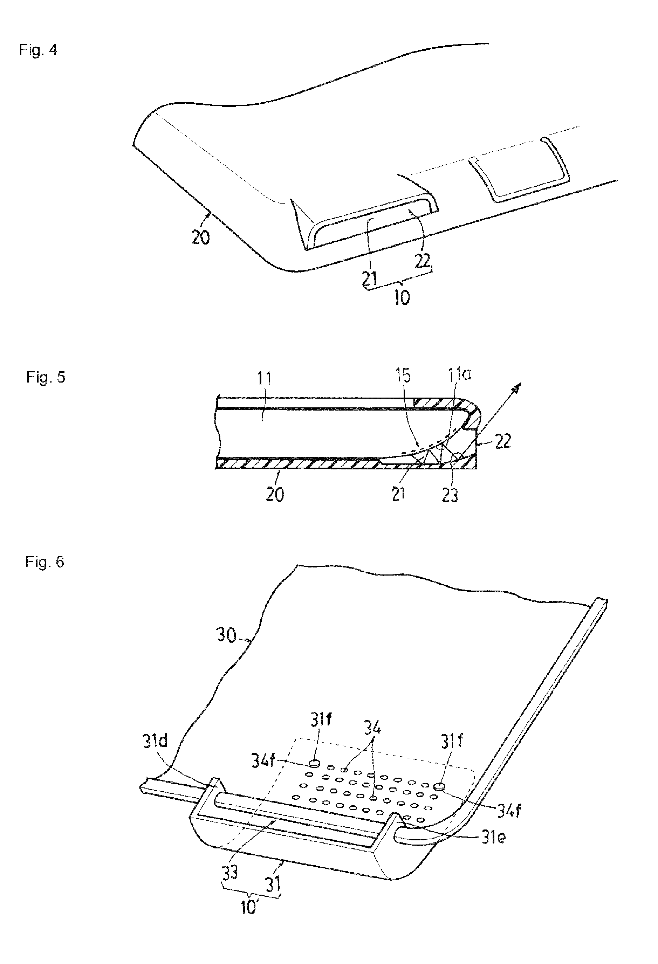

The sound guiding section 21 is formed such that a gap between an outer surface 11a of the mobile terminal device 11 of the speaker portion and the guide wall surface 23 increases gradually toward the sounding port 22. With this, in the sound guiding section 21, it is possible to expect a loudspeaker effect in a bell mouth shape in which the direction of a sound wave changes gradually (see Fig. 5).

The case 20 of Example 1 is attached to the mobile terminal device 11 from the rear surface side, whereby it is possible to guide sound generated by the speaker 15 toward the sounding port 22. The case 20 is suitably formed by a rein molding method using comparatively soft resin, such as silicon rubber.

Fig. 6 and the subsequent drawings are front views showing a sound guiding device 10' according to Example 2 of the invention, and the sound guiding device 10' is mounted on a case 30 that is attached to the rear surface side of the mobile terminal device 11. The case 30 has a sound hole 34, which has multiple small holes formed at a position corresponding to the speaker 15 to guide sound generated by the speaker 15 in a front direction, at a position of the case 30 corresponding to the speaker 15 of the mobile terminal device when attached to the mobile terminal device 11.

A sound guiding member 31 is mounted on the case 30. The sound guiding member 31 includes a sound guiding section 32, and a sounding port 33 through which the guided sound passes to the outside. The sound guiding member 31 is configured to be mounted on the outer side of the case in the vicinity of the sound hole 34 and used integrally with the case 30.

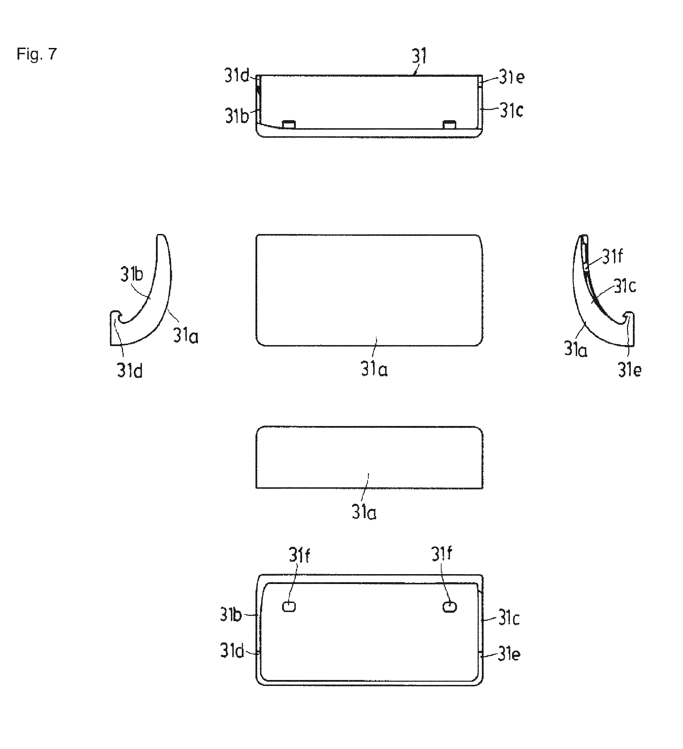

As shown in Fig. 7 in detail, the sound guiding member 31 has a curved portion 31a having a curved shape similar to an outer surface 30a of a mounting place on the case 30, and a pair of right and left side plates 31b and 31c on the right and left sides of the curved portion 31a to be in close contact with the outer surface 30a. A plurality of hooks 31d and 31e that are fitted to the edge of the case are provided in an end portion on the sounding port 33 side, a plurality of protrusions 31f are provided in the vicinity of an opposite end portion, and the protrusions 31f are fitted into fit holes 34f formed in a part of the portion of the sound hole 34.

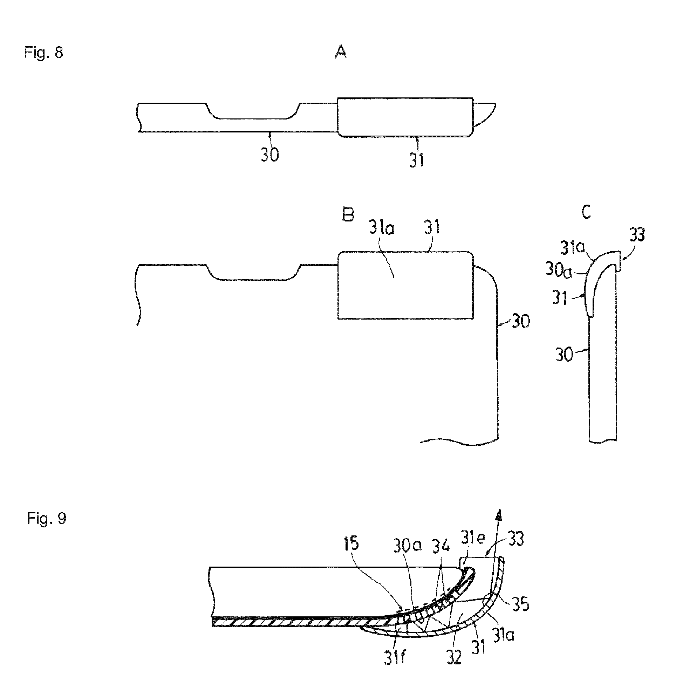

If the sound guiding member 31 is mounted on the case 30, the pair of right and left side plates 31b and 31c are in close contact with the outer surface shape 30a, and the closed sound guiding section 32 is formed. In the sound guiding section 32 of Example 2, the sound wave passes through the sounding port 33 while the direction of the sound wave changes gradually and is emitted to the outside, whereby it is possible to expect a loudspeaker effect in an expanding bell mouth shape (see Fig. 9). The case 30 of Example 2 is suitably formed by a resin molding method using comparatively soft resin, such as polycarbonate.

Although the sounding port 22 of Example 1 shown in Figs. 1 to 5 is directed downward from the mobile terminal device 11, it is possible to guide sound generated by the speaker 15 roughly in the front direction in a loudspeaker manner by the sound guiding section 22 having the guide wall surface 23 or 35. In Example 2 shown in Figs. 6 to 9, it is possible to guide sound in the front direction of the mobile terminal device 11 from the sounding port 33 directed toward the front surface in a loudspeaker manner.

According to the device of the invention configured as above, sound of the speaker provided on the rear surface side can be guided to the front surface side, and sound can be emitted in a loudspeaker manner. The case 20 or 30 that is attached to the mobile terminal device 11 doubles as the sound guiding device, whereby the protection of the mobile terminal device 11 and the sound guidance are performed simultaneously. The device of the invention may be carried out in a combination with a case having, for example, a frame structure in which a part thereof wraps around the front surface side and covers the outer circumferential portion of the display. In this case, it is preferable that a configuration in which a touch panel operation by a fingertip is not obstructed is made, for example, the portion of the display 12 on the front surface is a simple opening.

### Brief Description of Drawings

Fig. 1 is a perspective view showing Example 1 of a sound guiding device in a mobile terminal device according to the invention along with a mobile terminal device.
Fig. 2 is a bottom view showing a case to which the device of Example 1 is applied.
Fig. 3 is a partial rear view.
Fig. 4 is a partial perspective view.
Fig. 5 is a sectional view illustrating the action of Example 1.
Fig. 6 is a partial perspective view showing Example 2 of a sound guiding device in a mobile terminal device according to the invention.
Fig. 7 is a six-sided view showing a sound guiding member constituting the device of Example 2.
Fig. 8 shows the overall configuration of Example 2, and Fig. 8A is a bottom view, Fig. 8B is a rear view, and Fig. 8C is a side view.
Fig. 9 is a sectional view illustrating the action of Example 2.

### Explanation of Reference

10, 10': device
11: mobile terminal device
12: display
13: front camera
14: home
15: speaker
20, 30: case
21, 32: sound guiding section
22, 33: sounding port
23, 35: guide wall surface
31: sound guiding member

## Claims

1. A sound guiding device in a mobile terminal device provided with a speaker on a rear surface side that guides sound generated by the speaker in a front direction, the sound guiding device comprising:
a case that covers the speaker when attached to the mobile terminal device,
wherein a sound guiding section that guides sound generated by the speaker roughly in the front direction, and a sounding port through which the guided sound is emitted to the outside are provided at a position of the case corresponding to the speaker of the mobile terminal device when the case is attached to the mobile terminal device.

2. The sound guiding device in the mobile terminal device according to claim 1,
wherein the sound guiding section has a guide wall surface that is curved from the rear surface side of the mobile terminal device toward the front surface such that sound generated by the speaker is directed toward the sounding port, and
the sound guiding section is configured such that a gap between an outer surface of the mobile terminal device of a speaker portion and the guide wall surface increases gradually toward the sounding port.

3. The sound guiding device in the mobile terminal device according to claim 1 or 2,
wherein the case is formed by a resin molding method, and has the sound guiding section and the sounding port in a part of the case.

4. The sound guiding device in the mobile terminal device according to claim 1 or 2,
wherein the case is formed by a resin molding method and has a sound hole formed at a position corresponding to the speaker, a sound guiding member that includes a sound guiding section and a sounding port and is formed separately from the case is provided, and the sound guiding member is mounted on the outer side of the case in the vicinity of the sound hole and is integrated with the case.

5. A sound guiding member in a mobile terminal device provided with a speaker on a rear surface side that is mounted on a case attached to the mobile terminal device to guide sound generated by the speaker in a front direction,
wherein the sound guiding member has a curved portion having a curved shape similar to an outer surface of a mounting place on the case, and a pair of right and left side plates on the right and left sides of the curved portion, a plurality of hooks that are fitted to the edge of the case are provided in an end portion on the sounding port side, a plurality of protrusions are provided in the vicinity of an opposite end portion, and the protrusions are fitted into fit holes formed in a part of a sound hole section.
